# EUROPÄISCHE PATENTSCHRIFT

(11) **EP 3 735 150 B1**
(45) Veröffentlichungstag und Bekanntmachung des Hinweises auf die Patenterteilung: **19.07.2023**
(21) Anmeldenummer: 18829183.5
(22) Anmeldetag: 14.12.2018
(51) Int. Cl.: A47B 88/423, A47B 88/467, A47B 88/463, A47B 88/47

(54) **ANORDNUNG AUS EINEM AUFLAGESTEG FÜR EINEN SCHUBLADENBODEN UND EINER HALTEVORRICHTUNG**
ASSEMBLY MADE OF A BEARING WEB FOR A DRAWER BASE AND A HOLDING DEVICE
ENSEMBLE FORMÉ D'UNE NERVURE D'APPUI POUR FOND DE TIROIR ET D'UN DISPOSITIF DE RETENUE

(30) Priorität: 02.01.2018 AT 500012018
(43) Veröffentlichungstag der Anmeldung: 11.11.2020
(73) Patentinhaber: Julius Blum GmbH, 6973 Höchst (AT)
(72) Erfinder: JANSER, Pascal, Höchst 6973 (AT)
(74) Vertreter: Torggler & Hofmann Patentanwälte - Innsbruck
(86) Internationale Anmeldenummer: PCT/AT2018/060302
(87) Internationale Veröffentlichungsnummer: WO 2019/134010

(56) Entgegenhaltungen:
- WO-A1-2012/068605
- WO-A1-2012/156229
- DE-A1-102010 016 133
- US-A1- 2017 273 456

## Beschreibung

Die Erfindung betrifft eine Anordnung aus einer Schubladenseitenwand mit wenigstens einem Auflagesteg für einen Schubladenboden einer Schublade, wobei der Auflagesteg Teil der Schubladenseitenwand oder Teil einer Tragevorrichtung für die Schubladenseitenwand ist, wenigstens einer Antriebsvorrichtung, insbesondere Ausstoßvorrichtung, zum Antrieb der Schublade relativ zu einem Möbelkorpus und wenigstens einer Haltevorrichtung für die Antriebsvorrichtung, wobei die wenigstens eine Haltevorrichtung wenigstens ein Befestigungselement aufweist, mit welchem die wenigstens eine Haltevorrichtung am Auflagesteg befestigbar ist, der Auflagesteg wenigstens eine Aufnahme für das wenigstens eine Befestigungselement und benachbart zur wenigstens einen Aufnahme wenigstens einen Auflagebereich für den Schubladenboden umfasst, und das wenigstens eine Befestigungselement eine Stützfläche aufweist, welche in einem Befestigungszustand, in welchem die wenigstens eine Haltevorrichtung am Auflagesteg befestigt ist, dem Schubladenboden zugewandt ist.

In der Möbelbeschlägeindustrie werden seit vielen Jahren Antriebsvorrichtungen, im Speziellen Ausstoßvorrichtungen und Einziehvorrichtungen, eingesetzt, um bewegbare Möbelteile (z. B. Schubladen, Möbeltüren oder Möbelklappen) relativ zu einem Möbelkorpus zu bewegen. Wesentliche Ziele bei der Konstruktion solcher Antriebsvorrichtungen sind - neben einer möglichst einwandfreien Funktionalität - eine möglichst einfache Montage und ein geringer Platzbedarf. Beispiele für gattungsfremde Antriebsvorrichtung gehen aus der WO 2012/068605 A1 und der US 2017/0273456 A1 hervor.

Vor allem bei Schubladen ist im Bereich der Ausziehführungen sehr wenig Platz, um solche Antriebsvorrichtungen unterzubringen. Deswegen hat sich bei Schubladen die Montage der Antriebsvorrichtungen - im Speziellen der Ausstoßvorrichtungen - am Schubladenunterboden als eine platzsparende Lösung herauskristallisiert. Ein Beispiel für eine solche Ausführung geht aus der WO 2015/192153 A1 hervor. In diesem Fall ist die Montageplatte (Haltevorrichtung) der Ausstoßvorrichtung direkt am Schubladenboden befestigt.

Bei der WO 2012/156229 A1 geht es um ein Möbelteil mit wenigstens einem Mitnehmer zur Aktivierung mindestens eines Funktionsteils. In dieser Schrift ist der Mitnehmer in einem Lochfenster des Bodenträgers befestigt.

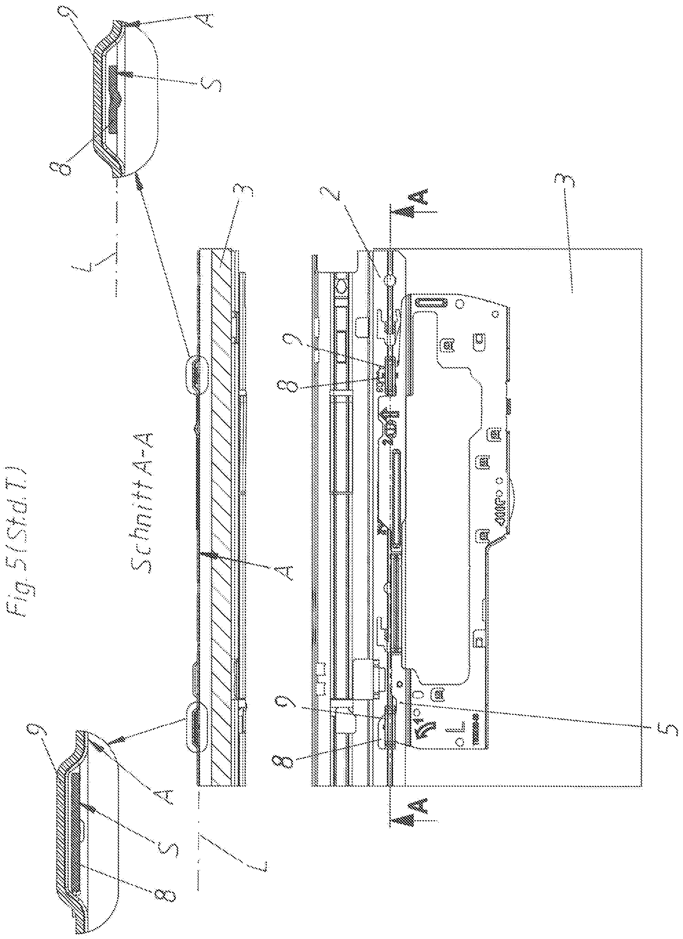

Von der Anmelderin werden seit einiger Zeit auch Antriebsvorrichtungen angeboten, bei denen die Haltevorrichtung der Antriebsvorrichtung nicht direkt am Schubladenboden befestigt ist, sondern bei denen die Haltevorrichtung an einem Auflagesteg einer Schubladenseitenwand befestigt ist. Ein derartiger gattungsbildender Stand der Technik wird weiter unten mit Verweis auf die Fig. 5 noch detaillierter beschrieben. Bei dieser bekannten Befestigungsvariante sind am Auflagesteg zwei laschenförmige Aufnahmen ausgebildet. In diese Aufnahmen wird die Haltevorrichtung der Antriebsvorrichtung über Befestigungselemente (in Form von Vorsprüngen) eingesteckt. Die Befestigungselemente kontaktieren dabei beidseitig die Oberflächen der Aufnahme und werden an der Aufnahme festgeklemmt.

Die Aufgabe der vorliegenden Erfindung besteht darin, bei einer Anordnung eine alternative oder verbesserte Befestigungsmöglichkeit zu schaffen. Insbesondere soll der Platzbedarf möglichst gering sein.

Dies wird durch eine Anordnung mit den Merkmalen von Anspruch 1 gelöst. Demnach ist erfindungsgemäß vorgesehen, dass die Stützfläche des wenigstens einen Befestigungselements zusammen mit dem wenigstens einen Auflagebereich des Auflagestegs im Befestigungszustand eine im Wesentlichen ebene Schubladenboden-Auflagefläche für den Schubladenboden ausbildet, wobei die Schubladenboden-Auflagefläche im Befestigungszustand am Schubladenboden bündig zur Anlage bringbar ist. In einer Montagestellung wird also das wenigstens eine Befestigungselement zwischen Aufnahme und Schubladenboden eingeklemmt, und nicht nur an der Aufnahme allein festgeklemmt. Dadurch kann der Befestigungsbereich (Aufnahme und Befestigungselement) um ein Drittel schmaler ausgebildet werden. Die gesamte Anordnung ist dadurch kompakter.

Bevorzugte Ausgestaltungen der Anordnung sind in den abhängigen Ansprüchen angegeben.

Im Prinzip kann der von der Stützfläche abgewandte Bereich des Befestigungselements beliebig ausgebildet sein, solange ein ausreichender Halt an der Aufnahme möglich ist. Es ist vorgesehen, dass das wenigstens eine Befestigungselement eine von der Stützfläche abgewandte Haltefläche aufweist, wobei im Befestigungszustand die Haltefläche des Befestigungselements an einer Gegenhaltefläche der Aufnahme des Auflagestegs anliegt. Für eine einfache Herstellung ist bevorzugt vorgesehen, dass das wenigstens eine Befestigungselement flächig, vorzugsweise zungenförmig, ausgebildet ist. Insbesondere ist dabei vorgesehen, dass die Haltefläche parallel zur Stützfläche ausgerichtet ist. Für die an der Haltevorrichtung ausgebildete Gegenhaltefläche ist bevorzugt vorgesehen, dass diese parallel zum Auflagebereich ausgerichtet ist.

Der Auflagesteg sollte so ausgebildet sein, dass der Schubladenboden auf einfache Art und Weise mit dem Auflagesteg verbunden werden kann. Bevorzugt ist der Auflagesteg als flächiges Bauteil ausgebildet. Für eine einfache Herstellung ist bevorzugt vorgesehen, dass der Auflagesteg als Blech mit einer im Wesentlichen regelmäßigen Blechdicke ausgebildet ist. Unter Blech wird ein flaches Walzwerkfertigprodukt aus Metall verstanden. "Im Wesentlichen regelmäßig" bedeutet, dass die Blechdicke geringfügige Unterschiede aufweisen kann. So kann die Blechdicke im Randbereich von Ausstanzungen dicker sind oder in Biegebereichen dünner sein. Meistens werden für den Auflagesteg Bleche verwendet, die eine Blechdicke zwischen 0,3 mm und 4 mm, vorzugsweise zwischen 0,6 mm und 1,5 mm, haben.

Es ist möglich, dass die wenigstens eine Aufnahme als separater Bauteil ausgebildet ist und mit dem Auflagesteg (lösbar oder fix) verbunden ist. Bevorzugt ist allerdings vorgesehen, dass die Aufnahme einstückig mit dem Auflagesteg ausgebildet ist.

Die Aufnahme im Auflagesteg muss nur so ausgebildet sein, dass das wenigstens eine Befestigungselement der Haltevorrichtung an der Aufnahme befestigt werden kann. Für eine einfache Ausgestaltung ist bevorzugt vorgesehen, dass die Aufnahme eine vom Auflagebereich wegführende Einbuchtung im Blech aufweist. Bevorzugt ist vorgesehen, dass die wenigstens eine Aufnahme als U-förmige Lasche aus dem Blech des Auflagestegs herausgebogen ist. Für eine einfache Befestigung des Befestigungselements ist bevorzugt vorgesehen, dass die Gegenhaltefläche der Aufnahme - rechtwinkelig zur Längserstreckung des Blechs gemessen - um (vorzugsweise genau) eine Blechdicke vom Auflagebereich beabstandet ist. Die Gegenhaltefläche ist demnach durch den "tiefsten" Bereich der U-förmigen Lasche gebildet.

Für eine besonders kompakte Bauweise ist bevorzugt vorgesehen, dass das Befestigungselement und die Aufnahme im Befestigungszustand gemeinsam - rechtwinkelig zur Längserstreckung des Blechs gemessen - eine Dicke aufweisen, welche doppelt so groß ist wie die Blechdicke. Dagegen war bei bisherigen Ausführungen die Dicke im Befestigungsbereich mindestens dreimal so groß wie die Blechdicke.

Die Haltevorrichtung sollte so ausgebildet sein, dass die Antriebsvorrichtung einfach befestigt werden kann und dass der Materialaufwand möglichst gering ist und dennoch ein stabile Bauweise gegeben ist. Bevorzugt ist vorgesehen, dass die Haltevorrichtung als ein Blech mit einer im Wesentlichen regelmäßigen Blechdicke ausgebildet ist. "Im Wesentlichen regelmäßig" bedeutet, dass die Blechdicke natürlich geringfügige Unterschiede aufweisen kann. So kann die Blechdicke im Randbereich von Ausstanzungen dicker sind oder in Biegebereichen dünner sein. Meistens werden für die Haltevorrichtung Bleche verwendet, die eine Blechdicke zwischen 0,3 mm und 4 mm, vorzugsweise zwischen 0,6 mm und 1,5 mm, haben. Besonders bevorzugt ist vorgesehen, dass die Haltevorrichtung dieselbe Blechdicke aufweist wie der Auflagesteg.

Es ist möglich, dass das wenigstens eine Befestigungselement als separater Bauteil ausgebildet ist und mit der Haltevorrichtung (lösbar oder fix) verbunden ist. Bevorzugt ist allerdings vorgesehen, dass das Befestigungselement einstückig mit der Haltevorrichtung ausgebildet ist.

Generell ist es möglich, dass die Haltevorrichtung über separate Verbindungselemente am Schubladenboden montiert, vorzugsweise festgeschraubt, wird. Für eine einfache Montage ist allerdings vorgesehen, dass die Haltevorrichtung nur über das wenigstens eine Befestigungselement am Auflagesteg gehalten wird.

Bevorzugt weist die Haltevorrichtung zwei, vorzugsweise zungenförmige, Befestigungselemente auf.

Gemäß einem bevorzugten Ausführungsbeispiel ist vorgesehen, dass die Haltevorrichtung einen im Wesentlichen ebenen Antriebsvorrichtung-Montagebereich, einen im Wesentlichen ebenen Schubladenboden-Anlagebereich und das wenigstens eine Befestigungselement aufweist. Für eine sichere Montage der Haltevorrichtung samt Antriebsvorrichtung ist bevorzugt vorgesehen, dass zwischen dem Antriebsvorrichtung-Montagebereich und dem Schubladenboden-Anlagebereich ein Knick ausgebildet ist, wobei der Antriebsvorrichtung-Montagebereich gegenüber dem Schubladenboden-Anlagebereich in einem Winkelbereich zwischen 1° und 15°, vorzugsweise zwischen 3° und 5°, in Richtung Schubladenboden gebogen ist. Dadurch wird der Antriebsvorrichtung-Montagebereich an den Schubladenboden angepresst. Dies führt zu einem stabilen Halt und zu einer kompakten Bauweise. Die Antriebsvorrichtung steht also möglichst wenig vom Schubladenboden vor.

An sich ist es ausreichend, wenn nur das wenigstens eine Befestigungselement für die Befestigung der Haltevorrichtung am Auflagesteg sorgt. Um einen noch sichereren Halt zu erreichen, ist allerdings bevorzugt vorgesehen, dass an der Haltevorrichtung wenigstens ein, vorzugsweise zungenförmiges, Klemmelement angeordnet ist, welches im Befestigungszustand mit einer dem Schubladenboden zugewandten, vorzugsweise parallel zur Stützfläche des Befestigungselements ausgerichteten, Klemmfläche an einer vom Auflagebereich des Auflagestegs abgewandten, vorzugsweise parallel zum Auflagebereich des Auflagestegs ausgerichteten, Gegenklemmfläche des Auflagestegs anliegt. Dadurch wird der Auflagesteg zwischen dem Klemmelement und dem Schubladenboden eingeklemmt. Das wenigstens eine Klemmelement und das wenigstens eine Befestigungselement sind also zangenartig am Auflagesteg aufgesteckt. Vor allem mit diesem Klemmelement wird es ermöglicht, dass die Haltevorrichtung auch ohne den Schubladenboden sicher am Auflagesteg befestigt werden kann.

Das Klemmelement kann an sich als von der Haltevorrichtung separates Bauteil ausgebildet sein. Bevorzugt ist allerdings vorgesehen, dass das Klemmelement einstückig mit der Haltevorrichtung ausgebildet ist. Besonders bevorzugt ist vorgesehen, dass das wenigstens eine Klemmelement über einen Knickbereich mit dem Schubladenboden-Anlagebereich verbunden ist.

Um auch eine kompakte Bauweise zu ermöglichen, wenn ein Klemmelement vorhanden ist, ist bevorzugt vorgesehen, dass die Klemmfläche des wenigstens einen Klemmelements - rechtwinkelig zur Längserstreckung des Blechs der Haltevorrichtung gemessen - um (genau) eine Blechdicke von der Stützfläche des Befestigungselements beabstandet ist.

Für eine Bauweise mit möglichst wenigen Bauteilen ist - gemäß einer ersten Variante - erfindungsgemäß vorgesehen, dass der Auflagesteg Teil einer, vorzugsweise profilförmigen, Schubladenseitenwand (oft auch Schubladenzarge genannt) ist. Alternativ ist - gemäß einer zweiten Variante - erfindungsgemäß auch vorgesehen, dass der Auflagesteg Teil einer, vorzugsweise profilförmigen, Tragevorrichtung für eine Schubladenseitenwand ist. In diesem Fall bildet also die Tragevorrichtung den seitlichen unteren Eckbereich der Schublade, auf welcher dann die jeweilige Schubladenseitenwand mit der gewünschten Höhe, dem gewünschten Design oder dem gewünschten Material montiert werden kann. Besonders bevorzugt ist vorgesehen, dass der Auflagesteg Teil einer Behältnisschiene ist. Diese Behältnisschiene kann passgenau mit einer Ladenschiene einer Ausziehführung verbunden werden. Wenn die gesamte Schublade aus dem Möbelkorpus herausgenommen wird, erfolgt bei den ersten beiden Varianten die (lösbare und wiederherstellbare) Trennung zwischen der Schubladenzarge bzw. der Tragvorrichtung und der Ladenschiene der Ausziehführung. Das heißt, die Ladenschiene verbleibt bei ausgebauter Schublade (über die Korpusschiene) am Möbelkorpus. Bevorzugt ist vorgesehen, dass die Schubladenseitenwand, die Tragevorrichtung oder die Ladenschiene einen im Querschnitt im Wesentlichen U-förmigen Bereich aufweist, wobei der Auflagesteg (vorzugsweise im Bereich der Öffnung des U's) seitlich, vorzugsweise horizontal, von diesem im Wesentlichen U-förmigen Bereich in Richtung Schubladenboden absteht. In Montagestellung ist das U dieses U-förmigen Bereichs auf den Kopf gestellt.

Es ist bevorzugt vorgesehen, dass in einem Antriebsvorrichtung-Montagebereich der Haltevorrichtung die Antriebsvorrichtung zum Antrieb der Schublade relativ zu einem Möbelkorpus montiert ist.

Diese Antriebsvorrichtung kann als Ausstoßvorrichtung und/oder als Einziehvorrichtung ausgebildet sein.

Im Falle einer Ausstoßvorrichtung ist bevorzugt vorgesehen, dass diese einen Ausstoßkraftspeicher, ein vom Ausstoßkraftspeicher kraftbeaufschlagtes, bewegbares Ausstoßelement und eine Verriegelungsvorrichtung zum Verriegeln des Ausstoßelements in einer Verriegelungsstellung aufweist, wobei das Ausstoßelement durch Überdrücken der Schublade in eine hinter einer Schließstellung der Schublade liegende Überdrückstellung entriegelbar ist und bei entriegeltem Ausstoßelement die Schublade über den Ausstoßkraftspeicher und das Ausstoßelement in Öffnungsrichtung bewegbar ist. Zusätzlich kann am Möbelkorpus oder an der Korpusschiene ein mit dem Ausstoßelement korrespondierender Mitnehmer vorgesehen sein, von welchem sich die Ausstoßvorrichtung abstößt.

Im Lieferumfang der Möbelbeschlägehersteller sind meist nur die Möbelbeschläge umfasst. Das heißt, die anderen, meist aus Holz bestehenden Möbelkomponenten sind nicht im Lieferumfang enthalten. Ein Monteur wird also im Normalfall bei der Montage die bisher beschriebene Anordnung aus Haltevorrichtung und Auflagesteg mit den restlichen Komponenten der Schublade entsprechend verbinden und dann im Möbelkorpus einbauen. Im Anspruch 1 wurde die Anordnung zwar mit Bezug auf den Schubladenboden definiert, jedoch ist der Schubladenboden selbst nicht Teil der Anordnung.

Gemäß einem Ausführungsbeispiel kann vorgesehen sein, dass die Anordnung einen Schubladenboden aufweist, der in einer Montagestellung am Auflagebereich des Auflagestegs und an der Stützfläche des wenigstens einen Befestigungselements bündig anliegt. Vor allem durch dieses Anbringen des Schubladenbodens wird in der Montagestellung eine ausreichende Befestigung, insbesondere ein kraftschlüssiger Halt, der Haltevorrichtung zwischen dem Auflagesteg und dem Schubladenboden erreicht.

Der Schubladenboden kann an sich beliebig geformt sein. Bevorzugt ist vorgesehen, dass der Schubladenboden als ein flaches Holzbrett mit einer im Wesentlichen regelmäßigen Brettdicke ausgebildet ist. Besonders bevorzugt ist vorgesehen, dass die Unterseite des Schubladenbodens im Wesentlichen eben ausgebildet ist. Es ist aber möglich, dass in den seitlichen Bereichen jeweils eine Nut ausgebildet ist, über welche eine gute Verbindung mit korrespondierenden Elementen im Bereich des Auflagestegs erreicht werden kann.

Schutz wird auch begehrt für ein Möbel mit einem Möbelkorpus und einer Schublade, wobei die Schublade eine Anordnung nach wenigstens einem der vorhergehenden Ansprüche aufweist. Bevorzugt ist vorgesehen, dass das Möbel auch eine Ausziehführung aufweist, über welche die Schublade am Möbelkorpus bewegbar gelagert ist.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1: eine perspektivische Ansicht eines Möbels,
- Fig. 2: schematisch einen Schnitt durch einen Schublade,
- Fig. 3: schematisch eine Schnitt durch einen Befestigungsbereich nach dem Stand der Technik,
- Fig. 4: schematisch einen Schnitt durch einen Befestigungsbereich bei der vorliegenden Erfindung,
- Fig. 5: eine Ansicht von unten und einen Schnitt durch eine Schublade nach dem Stand der Technik
- Fig. 6: eine Ansicht von unten und einen Schnitt durch eine Schublade gemäß der vorliegenden Erfindung,
- Fig. 7: perspektivisch eine Anordnung aus Haltevorrichtung und Auflagesteg mit einer Ausziehführung,
- Fig. 8 bis 10: perspektivisch die Befestigungsbewegung der Haltevorrichtung am Auflagesteg,
- Fig. 11: perspektivisch eine im Bereich der Unterseite eines Schubladenbodens befestigte Haltevorrichtung für eine Antriebsvorrichtung,
- Fig. 12: eine Ansicht von unten passend zu Fig. 11 und
- Fig. 13: eine Frontansicht einer Anordnung aus Haltevorrichtung, Auflagesteg, Schubladenboden und Antriebsvorrichtung.

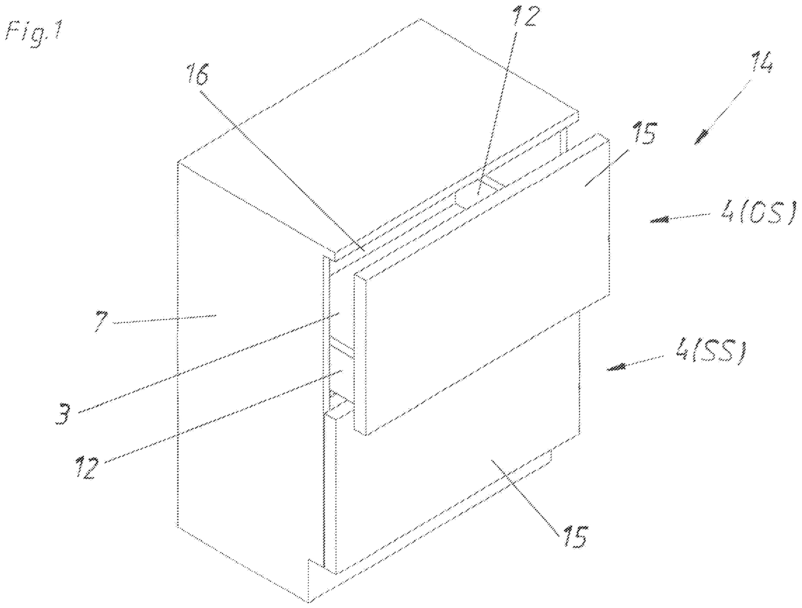

In Fig. 1 ist in einer perspektivischen Ansicht ein Möbel 14 mit in diesem Fall zwei Schubladen 4 dargestellt. Die beiden Schubladen 4 sind über hier nicht ersichtliche Ausziehführungen am Möbelkorpus 7 linear bewegbar gelagert. Die ober Schublade 4 befindet sich in einer Offenstellung OS, während sich die untere Schublade 4 in einer Schließstellung SS befindet. Jede Schublade 4 weist eine Frontblende 15, eine Schubladenrückwand 16, zwei Schubladenseitenwände 12 (mit jeweils einem Auflagesteg 2) und einen Schubladenboden 3 auf.

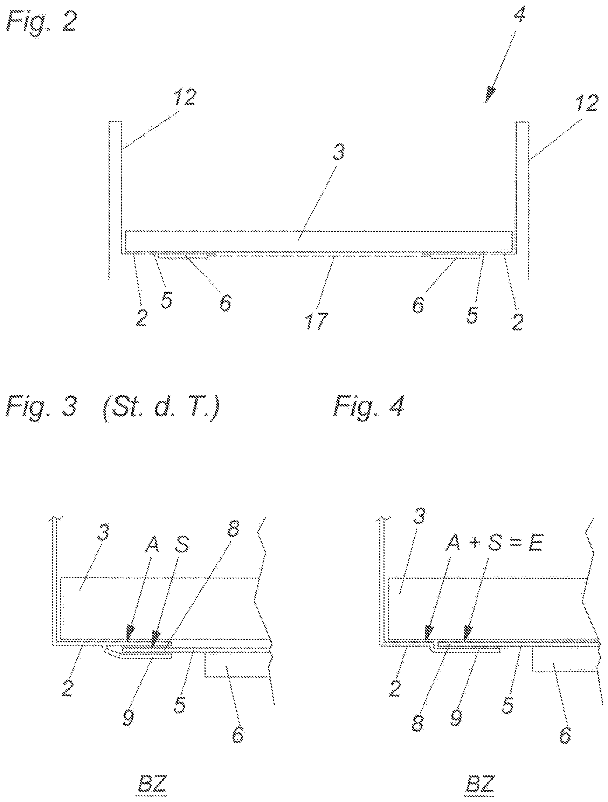

Fig. 2 zeigt schematisch einen Schnitt durch die Schublade 4. Dieser Schnitt verläuft parallel zur Vorderseite der Frontblende 15. In diesem Schnitt ist der Schubladenboden 3 als flaches Brett erkennbar. Dieser Schubladenboden 3 liegt seitlich auf den Auflagestegen 2 auf. Diese Auflagestege 2 sind in diesem Fall einstückig mit der profilförmigen Schubladenseitenwand 12 ausgebildet. An der Unterseite des Schubladenbodens 3 sind beiderseits Antriebsvorrichtungen 6 (vorzugsweise Ausstoßvorrichtungen) angeordnet. Bewegungen dieser Antriebsvorrichtungen 6 können über die strichliert dargestellte Synchronisationsstange 17 synchronisiert werden. Bei bisherigen Ausführungsvarianten sind diese Antriebsvorrichtungen 6 jeweils über (plattenförmige) Haltevorrichtungen 5 an der Unterseite des Schubladenbodens 3 oder im Bereich des Auflagestegs 2 befestigt worden.

In Fig. 3 ist schematisch eine Befestigungsvariante nach dem Stand der Technik dargestellt. Bei dieser Ausführung liegt der Schubladenboden 3 auf dem Auflagebereich A des Auflagestegs 2 bündig auf. Im Bereich des Auflagestegs 2 ist eine laschenförmige Aufnahme 9 ausgebildet. Die Haltevorrichtung 5 (mitsamt der Antriebsvorrichtung 6) ist über das Befestigungselement 8 in der Aufnahme 9 klemmend gehalten. Die dem Schubladenboden 3 zugewandte Stützfläche S des Befestigungselements 8 liegt klemmend an einer dem Schubladenboden 3 abgewandten Fläche des Auflagestegs 2 an. In dieser Darstellung ist ersichtlich, dass der Befestigungsbereich relativ dick ist.

Dagegen ist in Fig. 4 schematisch die Befestigungsvariante gemäß der vorliegenden Erfindung dargestellt. Auch hierbei liegt der Schubladenboden 3 auf dem Auflagebereich A des Auflagestegs 2 auf. Der Auflagesteg 2 weist eine benachbart zum Auflagebereich A angeordnete Aufnahme 9 für das Befestigungselement 8 der Haltevorrichtung 5 auf. Im dargestellten Befestigungszustand BZ ist das Befestigungselement 8 zwischen dem Schubladenboden 3 und der Aufnahme 9 klemmend gehalten. Die Stützfläche S des Befestigungselements 8 kontaktiert dabei den Schubladenboden 3 direkt. Die Stützfläche S des wenigstens einen Befestigungselements 8 bildet zusammen mit dem wenigstens einen Auflagebereich A des Auflagestegs 2 eine im Wesentlichen ebene Schubladenboden-Auflagefläche E für den Schubladenboden 3. Anders ausgedrückt sind die Stützfläche S und der Auflagebereich A im Befestigungszustand BZ in derselben horizontalen Ebene angeordnet. Der Schubladenboden 3 liegt bündig an der Schubladenboden-Auflagefläche E an. Wie aus einem Vergleich der Fig. 3 und 4 gut ersichtlich ist, ist in Fig. 4 der Befestigungsbereich um ca. ein Drittel niedriger ausgebildet.

Fig. 5 zeigt eine Haltevorrichtung 5 samt Antriebsvorrichtung 6 und einen Auflagesteg 2 nach dem Stand der Technik. Im unteren Bild ist eine Ansicht von unten auf den Schubladenboden 3 dargestellt. Am Auflagesteg 2 sind zwei laschenförmige Aufnahmen 9 ausgebildet, in welche die zungenförmigen Befestigungselemente 8 der Haltevorrichtung 5 eingesteckt sind. Der laschenförmig gebogene Bereich der Aufnahmen 9 ist besonders gut im Schnitt A-A erkennbar. Dieser Schnitt verläuft parallel zu einer Seitenfläche einer Schubladenseitenwand. Der Schubladenboden 3 liegt am Auflagebereich A des Auflagestegs 2 auf. In den herausgezoomten Details oben links und oben rechts ist erkennbar, dass die Befestigungselemente 8 in die Einbuchtung der Aufnahme 9 hineinragen, wobei die Stützfläche S - rechtwinkelig zur Längserstreckung L des Blechs des Auflagestegs 2 gemessen - vom Auflagebereich A beabstandet ist. Es ist ersichtlich, dass die Einbuchtung für die Aufnahme 9 relativ groß sein muss.

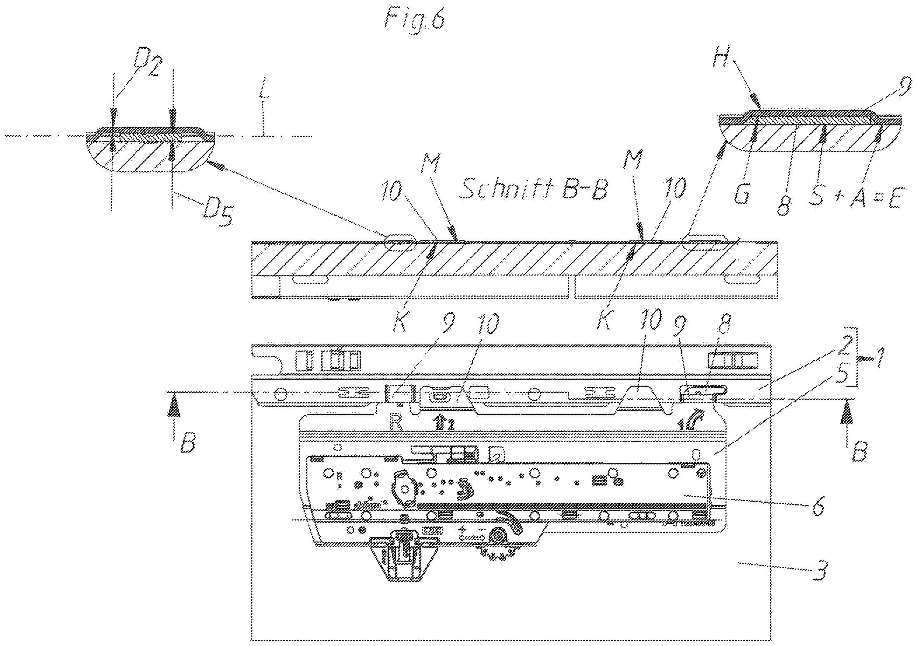

Dagegen ist in Fig. 6 ein Ausführungsbeispiel der vorliegenden Erfindung dargestellt. Im unteren Bereich ist wieder eine Ansicht von unten in Richtung Schubladenboden 3 dargestellt. Der oberhalb dargestellte Schnitt B-B verläuft parallel zu einer Seitenfläche der Schubladenseitenwand 12. Im Schnitt B-B ist ersichtlich, dass der Schubladenboden 3 bündig am Auflagesteg 2 anliegt. Die Haltevorrichtung 5 für die Antriebsvorrichtung 6 ist über die beiden Befestigungselemente 8 in die beiden Aufnahmen 9 des Auflagestegs 2 eingesteckt. Die Klemmelemente 10 sorgen für einen noch besseren Halt. In den herausgezoomten Details oben links und oben rechts ist jeweils der Auflagebereich A des Auflagestegs 2 ersichtlich, an welchem der Schubladenboden 3 anliegt. Die Aufnahme 9 weist eine vom Auflagebereich A wegführende oder separate Einbuchtung auf. In diese Einbuchtung der Aufnahme 9 ragt das Befestigungselement 8. Die dem Schubladenboden 3 zugewandte Stützfläche S des Befestigungselements 8 bildet zusammen mit dem Auflagebereich A des Auflagestegs 2 die im Wesentlichen ebene Schubladenboden-Auflagefläche E. Zudem weist das Befestigungselement 8 eine von der Stützfläche S abgewandte Haltefläche H auf. Diese Haltefläche H liegt im Befestigungszustand BZ an der Gegenhaltefläche G der Aufnahme 9 an. Diese Gegenhaltefläche G und die Haltefläche H sind parallel zum Auflagebereich A ausgerichtet. Der Auflagesteg 2 ist als Blech ausgebildet, wobei die Aufnahme 9 als Einbuchtung aus diesem Blech herausgebogen ist.

Der Auflagesteg 2 weist eine Blechdicke D₂ von etwa 0,8 mm auf. Die Haltevorrichtung 5 und dessen Befestigungselement 8 ist ebenfalls in Form eines Blechs ausgebildet. Diese Haltevorrichtung 5 weist die Blechdicke D₅ auf. Diese Blechdicke D₅ ist in etwa gleich groß wie die Blechdicke D₂ des Auflagestegs 2. Wie besonders gut aus den beiden Details ersichtlich, ist die Gegenhaltefläche G der Aufnahme 9 - rechtwinkelig zur Längserstreckung L des Blechs gemessen - um eine Blechdicke D₂ vom Auflagebereich A beabstandet. Zudem ist deutlich erkennbar, dass das Befestigungselement 8 und die Aufnahme 9 im Befestigungszustand BZ gemeinsam - rechtwinkelig zur Längserstreckung L des Blechs gemessen - eine Dicke aufweisen, welche doppelt so groß ist wie die Blechdicke D₂ des Auflagestegs 2. Nur im Schnitt B-B ist erkennbar, dass die Klemmelemente 10 jeweils eine dem Schubladenboden 3 zugewandte Klemmfläche K aufweisen. Diese Klemmflächen K liegen an einer Gegenklemmfläche M des Auflagestegs 2 an, welche dem Schubladenboden 3 abgewandt sind.

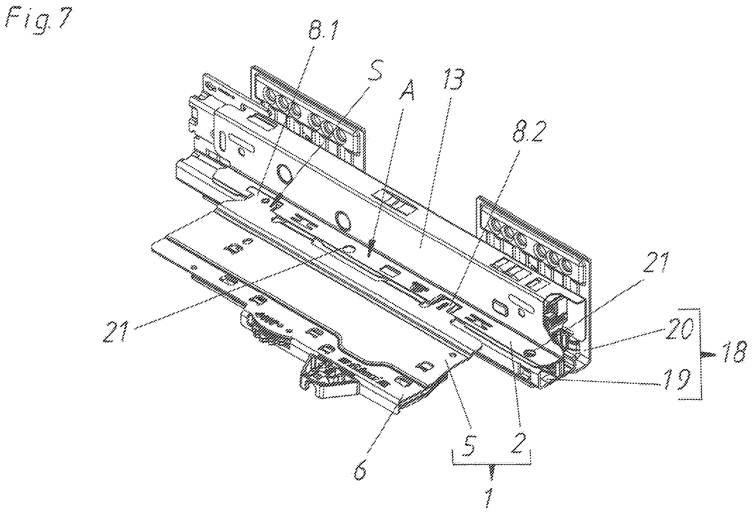

Fig. 7 zeigt in einer perspektivischen Darstellung eine Anordnung 1 zusammen mit einer Ausziehführung 18. Die Anordnung 1 setzt sich aus der Haltevorrichtung 5 für die Antriebsvorrichtung 6 und aus dem Auflagesteg 2 für den Schubladenboden 3 zusammen. Der Auflagesteg 2 ist in diesem Fall Teil einer profilförmigen Tragevorrichtung 13 für eine nicht dargestellte Schubladenseitenwand 12. Diese Tragevorrichtung 13 kann auch als Behältnisschiene bezeichnet werden und bildet einen seitlichen Rahmenteil der Schublade 4. Die Ausziehführung 18 umfasst eine Ladenschiene 19 und eine Korpusschiene 20. Bei einer Ausziehführung 18 in Form eines Vollauszugs kann auch noch eine Mittelschiene vorgesehen sein. Die Tragevorrichtung 13 ist mit der Ladenschiene 19 lösbar verbunden. In der Darstellung gemäß Fig. 7 sind die Befestigungselemente 8 (konkret in Form eines ersten Befestigungselements 8.1 und eines zweiten Befestigungselements 8.2) und deren Stützflächen S gut erkennbar. Zudem ist der Auflagebereich A des Auflagestegs 2 für den nicht dargestellten Schubladenboden 3 gut ersichtlich. Der Schubladenboden 3 kann mit nicht dargestellten Befestigungsmitteln (z. B. Schrauben) über die im Auflagesteg 2 ausgebildeten Ausnehmungen 21 fest mit dem Auflagesteg 2 verbunden werden. Die Klemmelemente 10 befinden sich in dieser Ansicht unterhalb des Auflagestegs 2. Durch diese Klemmelemente 10 kann die Haltevorrichtung 5 auch ohne den Schubladenboden 3 am Auflagesteg 2 befestigt werden, da die, vorzugsweise zungenförmigen, Klemmelemente 10 und die Befestigungselemente 8 den Auflagesteg 2 quasi zangenartig umklammern. Wenn keine Klemmelemente 10 vorgesehen sind, ist für eine sichere Befestigung auch die Montage des Schubladenbodens 3 notwendig.

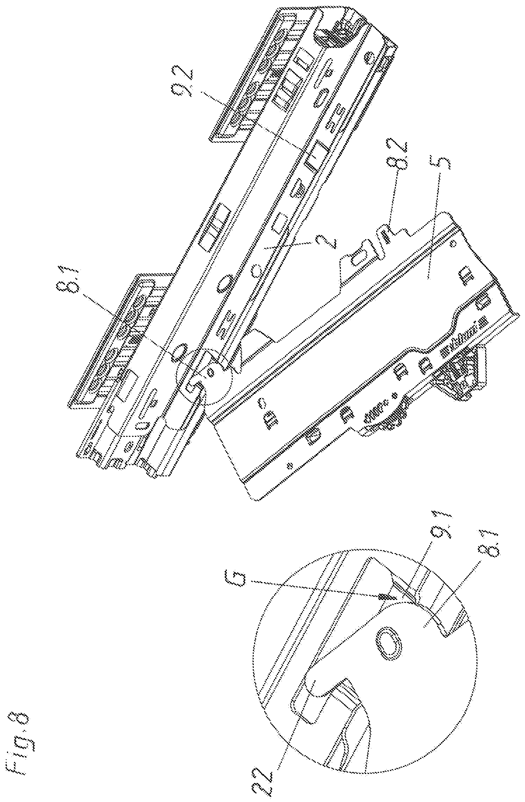

In den Fig. 8 bis 10 ist die Befestigungsbewegung der Haltevorrichtung 5 veranschaulicht.

Zunächst wird gemäß Fig. 8 das (linksseitige) erste Befestigungselement 8.1 mit dem nasenförmigen Vorsprung 22 in die (linksseitige) erste Aufnahme 9.1 eingeführt. Dadurch gelangt die vom Schubladenboden 3 abgewandte Haltefläche H des ersten Befestigungselement 8.1 in Kontakt mit der dem Schubladenboden 3 zugewandten Gegenhaltefläche G der ersten Aufnahme 9.1.

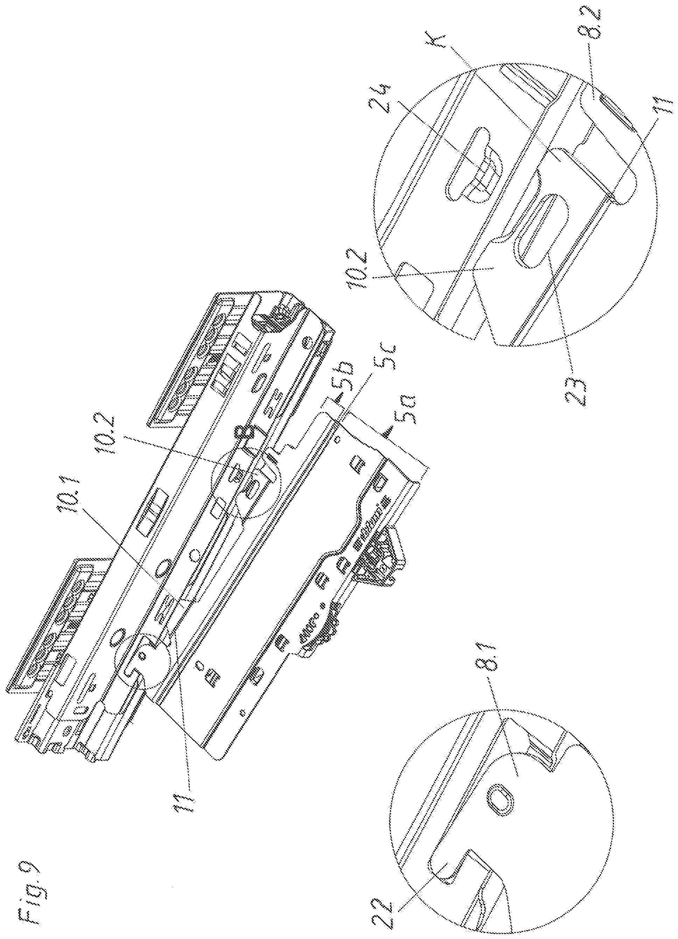

In Fig. 9 hat sich die Haltevorrichtung 5 noch weiter verschwenkt, sodass auch die Klemmfläche K des (linksseitigen) ersten Klemmelements 10.1 in Kontakt mit der Gegenklemmfläche M des Auflagestegs 2 gelangt. Im auf der rechten Seite dargestellten Detail ist erkennbar, dass das (rechtsseitige) zweite Klemmelement 10.2 eine Ausnehmung 23 aufweist. Korrespondierend ist am Auflagesteg 2 eine vom Auflagebereich A wegweisende Erhöhung 24 ausgebildet. Beide Klemmelemente 10.1 und 10.2 sind jeweils über einen Knickbereich 11 mit dem Schubladenboden-Anlagebereich 5b der Haltevorrichtung 5 verbunden.

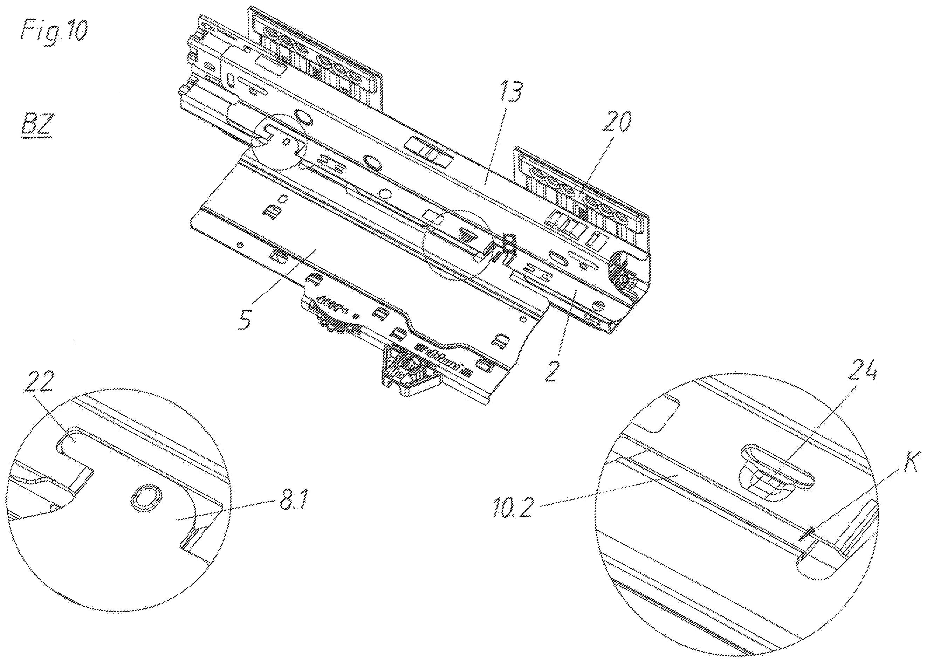

In Fig. 10 ist die Haltevorrichtung 5 vollständig am Auflagesteg 2 festgeklemmt. Der Befestigungszustand BZ ist erreicht. Das heißt, die Haltefläche H des ersten Befestigungselements 8.1 liegt an der Gegenhaltefläche G der ersten Aufnahme 9.1 an und die Haltefläche H des zweiten Befestigungselements 8.1 liegt an der Gegenhaltefläche der zweiten Aufnahme 9.2 an. Im rechten Detail von Fig. 10 ist erkennbar, dass die Erhöhung 24 im Auflagesteg 2 in die (hier nicht erkennbare) Ausnehmung 23 im zweiten Klemmelement 10.2 hineinragt. Dadurch ist ein besonders sicherer Halt gegeben.

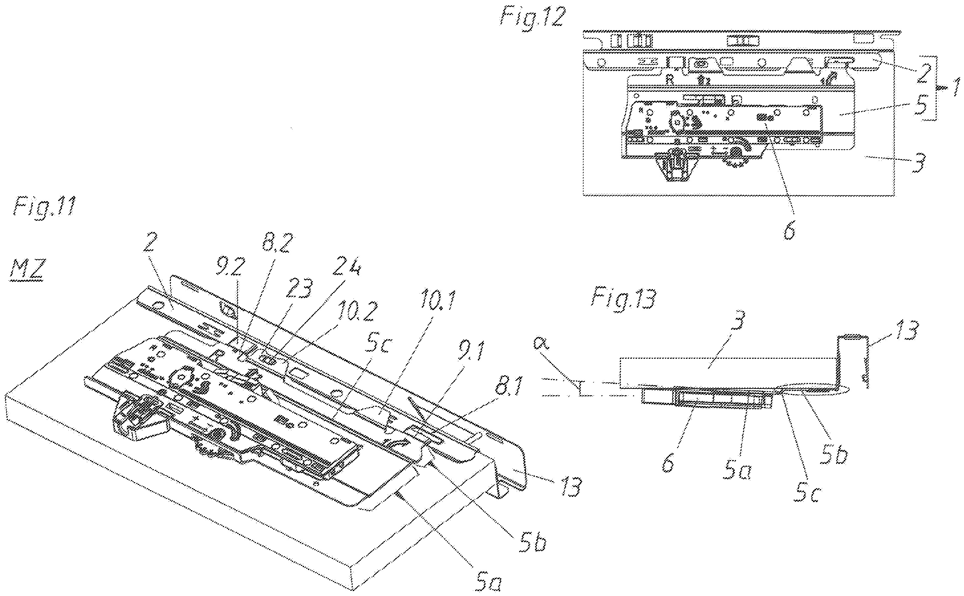

In Fig. 11 ist perspektivisch die Anordnung 1 von unten dargestellt. In Fig. 12 ist dieselbe Anordnung in einer Draufsicht von unten dargestellt. In diesen Darstellungen ist auch der Schubladenboden 3 mit dem Auflagesteg 2 verbunden, weswegen die Montagestellung MZ gegeben ist. Die Haltevorrichtung 5 weist einen im Wesentlichen ebenen Antriebsvorrichtung-Montagebereich 5a und einen im Wesentlichen ebenen Schubladenboden-Anlagebereich 5b sowie die beiden Befestigungselemente 8.1 und 8.2 auf. Am Antriebsvorrichtung-Montagebereich 5a ist die Antriebsvorrichtung 6, vorzugsweise lösbar, montiert. Gut erkennbar ist in der Fig. 11, dass die beiden Aufnahmen 9.1 und 9.2 laschenförmig ausgebildet sind. In Fig. 11 ist auch erkennbar, dass der Erhöhung 24 durch die Ausnehmung 23 des zweiten Klemmelement 10.2 hindurchragt. Die beiden Klemmelemente 10.1 und 10.2 liegen jeweils über die Klemmflächen K an den durch die Klemmelemente 10.1 und 10.2 verdeckten Gegenklemmflächen M des Auflagestegs 2 an. Die Befestigung der Haltevorrichtung 5 kann vor der Montage des Schubladenbodens 3 erfolgen (siehe Fig. 7 bis 10). Bevorzugt ist allerdings vorgesehen, dass die Befestigung der Haltevorrichtung 5 erst bei am Auflagesteg 2 montierten Schubladenboden 3 erfolgt.

Schließlich zeigt Fig. 13 noch in einer Frontansicht die Haltevorrichtung 5 samt Antriebsvorrichtung 6 und Schubladenboden 3. Darin ist gut erkennbar, dass zwischen dem Antriebsvorrichtung-Montagebereich 5a und dem Schubladenboden-Anlagebereich 5b ein Knick 5c ausgebildet ist. Dieser Knick 5c ist derart ausgebildet, dass der Antriebsvorrichtung-Montagebereich 5a gegenüber dem Schubladenboden-Anlagebereich 5b in einem Winkelbereich α zwischen 1° und 15°, vorzugsweise zwischen 3° und 5°, in Richtung Schubladenboden 3 gebogen ist. Konkret ist ein Winkel von etwa 4° gegeben. Dadurch wird die Antriebsvorrichtung 6 zum Schubladenboden 3 hin gedrückt. Dies sorgt für einen schwingungsfreien Halt und für einen geringen Platzverbrauch.

### Bezugszeichenliste:

- 1: Anordnung
- 2: Auflagesteg
- 3: Schubladenboden
- 4: Schublade
- 5: Haltevorrichtung
- 5a: Antriebsvorrichtung-Montagebereich
- 5b: Schubladenboden-Montagebereich
- 5c: Knick
- 6: Antriebsvorrichtung
- 7: Möbelkorpus
- 8: Befestigungselement
- 8.1: erstes Befestigungselement
- 8.2: zweites Befestigungselement
- 9: Aufnahme
- 9.1: erste Aufnahme
- 9.2: zweite Aufnahme
- 10: Klemmelement
- 10.1: ersten Klemmelement
- 10.2: zweites Klemmelement
- 11: Knickbereich
- 12: Schubladenseitenwand
- 13: Tragevorrichtung
- 14: Möbel
- 15: Frontblende
- 16: Schubladenrückwand
- 17: Synchronisationsstange
- 18: Ausziehführung
- 19: Ladenschiene
- 20: Korpusschiene
- 21: Ausnehmungen
- 22: nasenförm iger Vorsprung
- 23: Ausnehmung
- 24: Erhöhung
- A: Auflagebereich
- S: Stützfläche
- BZ: Befestigungszustand
- E: ebene Schubladenboden-Auflagefläche
- H: Haltefläche
- G: Gegenhaltefläche
- D₂: Blechdicke Auflagesteg
- L: Längserstreckung
- D₅: Blechdicke Haltevorrichtung
- a: Winkelbereich
- K: Klemmfläche
- M: Gegenklemmfläche
- MZ: Montagestellung
- OS: Offenstellung
- SS: Schließstellung

## Patentansprüche

1. Anordnung (1) aus
- einer Schubladenseitenwand (12) mit wenigstens einem Auflagesteg (2) für einen Schubladenboden (3) einer Schublade (4), wobei der Auflagesteg (2) Teil der Schubladenseitenwand (12) oder Teil einer Tragevorrichtung (13) für die Schubladenseitenwand (12) ist,
- einer Antriebsvorrichtung (6), insbesondere Ausstoßvorrichtung, zum Antrieb der Schublade (4) relativ zu einem Möbelkorpus (7) und
- wenigstens einer Haltevorrichtung (5) für die Antriebsvorrichtung (6), wobei
- die wenigstens eine Haltevorrichtung (5) wenigstens ein Befestigungselement (8) aufweist, mit welchem die wenigstens eine Haltevorrichtung (5) am Auflagesteg (2) befestigbar ist,
- der Auflagesteg (2) wenigstens eine Aufnahme (9) für das wenigstens eine Befestigungselement (8) und benachbart zur wenigstens einen Aufnahme (9) wenigstens einen Auflagebereich (A) für den Schubladenboden (3) umfasst, und
- das wenigstens eine Befestigungselement (8) eine Stützfläche (S) aufweist, welche in einem Befestigungszustand (BZ), in welchem die wenigstens eine Haltevorrichtung (5) am Auflagesteg (2) befestigt ist, dem Schubladenboden (3) zugewandt ist,
**dadurch gekennzeichnet, dass** die Stützfläche (S) des wenigstens einen Befestigungselements (8) zusammen mit dem wenigstens einen Auflagebereich (A) des Auflagestegs (2) im Befestigungszustand (BZ) eine im Wesentlichen ebene Schubladenboden-Auflagefläche (E) für den Schubladenboden (3) ausbildet, wobei die Schubladenboden-Auflagefläche (E) im Befestigungszustand (BZ) am Schubladenboden (3) bündig zur Anlage bringbar ist, wobei das wenigstens eine Befestigungselement (8) eine von der Stützfläche (S) abgewandte Haltefläche (H) aufweist, wobei im Befestigungszustand (BZ) die Haltefläche (H) des Befestigungselements (8) an einer Gegenhaltefläche (G) der Aufnahme (9) des Auflagestegs (2) anliegt.

2. Anordnung nach Anspruch 1, **dadurch gekennzeichnet, dass** die Haltefläche (H) parallel zur Stützfläche (S) ausgerichtet ist und/oder die Gegenhaltefläche (G) parallel zum Auflagebereich (A) ausgerichtet ist.

3. Anordnung nach Anspruch 1 oder 2, **dadurch gekennzeichnet, dass** der Auflagesteg (2) als Blech mit einer im Wesentlichen regelmäßigen Blechdicke (D₂) ausgebildet ist.

4. Anordnung nach Anspruch 3, **dadurch gekennzeichnet, dass** die Aufnahme (9) eine vom Auflagebereich (A) wegführende Einbuchtung im Blech aufweist.

5. Anordnung nach Anspruch 4, **dadurch gekennzeichnet, dass** die Gegenhaltefläche (G) der Aufnahme (9) - rechtwinkelig zur Längserstreckung (L) des Blechs gemessen - um eine Blechdicke vom Auflagebereich (A) beabstandet ist.

6. Anordnung nach Anspruch 5, **dadurch gekennzeichnet, dass** das Befestigungselement (8) und die Aufnahme (9) im Befestigungszustand (BZ) gemeinsam - rechtwinkelig zur Längserstreckung (L) des Blechs gemessen - eine Dicke aufweisen, welche doppelt so groß ist wie die Blechdicke des Auflagestegs (2).

7. Anordnung nach einem der Ansprüche 1 bis 6, **dadurch gekennzeichnet, dass** die Haltevorrichtung (5) als ein Blech mit einer im Wesentlichen regelmäßigen Blechdicke (Os) ausgebildet ist.

8. Anordnung nach einem der Ansprüche 1 bis 7, **dadurch gekennzeichnet, dass** die Haltevorrichtung (5) einen im Wesentlichen ebenen Antriebsvorrichtung-Montagebereich (5a) und einen im Wesentlichen ebenen Schubladenboden-Anlagebereich (5b) aufweist.

9. Anordnung nach Anspruch 8, **dadurch gekennzeichnet, dass** zwischen dem Antriebsvorrichtung-Montagebereich (5a) und dem Schubladenboden-Anlagebereich (5b) ein Knick (5c) ausgebildet ist, wobei der Antriebsvorrichtung-Montagebereich (5a) gegenüber dem Schubladenboden-Anlagebereich (5b) in einem Winkelbereich (α) zwischen 1° und 15°, vorzugsweise zwischen 3° und 5°, in Richtung Schubladenboden (3) gebogen ist.

10. Anordnung nach einem der Ansprüche 1 bis 9, **dadurch gekennzeichnet, dass** an der Haltevorrichtung (5) wenigstens ein Klemmelement (10) angeordnet ist, welches in Befestigungszustand (BZ) mit einer dem Schubladenboden (3) zugewandten, vorzugsweise parallel zur Stützfläche (S) des Befestigungselements (8) ausgerichteten, Klemmfläche (K) an einer vom Auflagebereich (A) des Auflagestegs (2) abgewandten, vorzugsweise parallel zum Auflagebereich des Auflagestegs (2) ausgerichteten, Gegenklemmfläche (M) des Auflagestegs (2) anliegt.

11. Anordnung nach Anspruch 8 oder 9 und nach Anspruch 10, **dadurch gekennzeichnet, dass** das wenigstens eine Klemmelement (10) über einen Knickbereich (11) mit dem Schubladenboden-Anlagebereich (5b) verbunden ist.

12. Anordnung nach Anspruch 10 oder 11, **dadurch gekennzeichnet, dass** die Klemmfläche (K) des wenigstens einen Klemmelements (10) - rechtwinkelig zur Längserstreckung (L) des Blechs der Haltevorrichtung (5) gemessen - um eine Blechdicke (D₅) von der Stützfläche (S) des Befestigungselements (8) beabstandet ist.

13. Anordnung nach einem der Ansprüche 8 bis 12, **dadurch gekennzeichnet. dass** in einem Antriebsvorrichtung-Montagebereich (5a) der Haltevorrichtung (5) die Antriebsvorrichtung (6) zum Antrieb der Schublade (4) relativ zu einem Möbelkorpus (7) montiert ist.

14. Anordnung nach wenigstens einem der vorhergehenden Ansprüche, **gekennzeichnet durch** einen Schubladenboden (3), der in einer Montagestellung (MZ) am Auflagebereich (A) des Auflagestegs (A) und an der Stützfläche (S) des wenigstens einen Befestigungselements (8) bündig anliegt.

15. Möbel (14) mit einem Möbelkorpus (7) und einer Schublade (4), wobei die Schublade (4) eine Anordnung (1) nach wenigstens einem der vorhergehenden Ansprüche aufweist.

## Claims

1. An arrangement (1) comprising
- a drawer side wall (12) having at least one bearing web (2) for a drawer base (3) of a drawer (4), wherein the bearing web (2) is part of the drawer side wall (12) or part of a carrier device (13) for the drawer side wall (12),
- a drive device (6), in particular an ejection device, for driving the drawer (4) relative to a furniture carcass (7), and
- at least one holding device (5) for the drive device (6), wherein
- the at least one holding device (5) has at least one securing element (8), by means of which the at least one holding device (5) can be secured to the bearing web (2),
- the bearing web (2) comprises at least one receiving area (9) for the at least one securing element (8) and at least one bearing region (A) for the drawer base (3) adjacently to the at least one receiving area (9), and
- the at least one securing element (8) comprises a support surface (S) that faces the drawer base (3) in a secured state (BZ), in which the at least one holding device (5) is secured to the bearing web (2),
**characterized in that** the support surface (S) of the at least one securing element (8) together with the at least one bearing region (A) of the bearing web (2) form a substantially flat drawer base bearing surface (E) for the drawer base (3) in the secured state (BZ), wherein the drawer base bearing surface (E) can be brought to rest against the drawer base (3) in a flush manner in the secured state (BZ), wherein the at least one securing element (8) has a holding surface (H) which is remote from the support surface (3), wherein in the secured state (BZ) the holding surface (H) of the securing element (8) rests on a counter holding surface (G) of the receiving area (9) of the bearing web (2).

2. The arrangement according to claim 1, **characterized in that** the holding surface (H) is oriented parallel to the support surface (S) and/or the counter holding surface (G) is oriented parallel to the bearing region (A).

3. The arrangement according to claim 1 or 2, **characterized in that** the bearing web (2) is formed as a metal sheet with a substantially constant sheet thickness (D2).

4. The arrangement according to claim 3, **characterized in that** the receiving area (9) comprises a recess in the metal sheet which leads away from the bearing region (A).

5. The arrangement according to claim 4, **characterized in that** the counter holding surface (G) of the receiving area (9) is distanced by one sheet thickness (D2) from the bearing region (A) - measured rectangular to the longitudinal extension (L) of the metal sheet.

6. The arrangement according to claim 5, **characterized in that** in the secured state (BZ) the securing element (8) and the receiving area (9) together have a thickness - measured rectangular to the longitudinal extension (L) of the metal sheet - which is twice as thick as the sheet thickness (D2) of the bearing web (2).

7. The arrangement according to one of the claims 1 to 6, **characterized in that** the holding device (5) is formed as a metal sheet with a substantially constant sheet thickness (D5) .

8. The arrangement according to one of the claims 1 to 7, **characterized in that** the holding device (5) comprises a substantially flat drive device mounting region (5a) and a substantially flat drawer base resting region (5b).

9. The arrangement according to claim 8, **characterized in that** a bend (5c) is formed between the drive device mounting region (5a) and the drawer base resting region (5b), wherein the drive device mounting region (5a) is bent relative to the drawer base resting region (5b) in an angle region (α) between 1° and 15°, preferably between 3° and 5°, towards the drawer base (3).

10. The arrangement according to one of the claims 1 to 9, **characterized in that** at least one clamping element (10) is arranged on the holding device (5), which clamping element (10) in the secured state (BZ) abuts with its clamping surface (K) which is facing towards the drawer base (3) - preferably the clamping surface (K) being oriented parallel to the support surface (S) of the securing element (8) - a counter clamping surface (M) of the bearing web (2) which counter clamping surface (M) is remote from the bearing region (A) of the bearing web (2) - preferably the counter clamping surface (M) being oriented parallel to the bearing region of the bearing web (2).

11. The arrangement according to claim 8 or 9 and according to claim 10, **characterized in that** the at least one clamping element (10) is connected to the drawer base resting region (5b) by means of a bent region (11).

12. The arrangement according to claim 10 or 11, **characterized in that** the clamping surface (K) of the at least one clamping element (10) - measured rectangular to the longitudinal extension (L) of the metal sheet of the holding device (5) - is distanced by one sheet thickness (D5) from the support surface (S) of the securing element (8).

13. The arrangement according to one of the claims 8 to 12, **characterized in that** the drive device (6) for driving the drawer (4) relative to the furniture carcass (7) is mounted in the drive device mounting region (5a) of the holding device (5).

14. The arrangement according to at least one of the preceding claims, **characterized by** a drawer base (3) which in a mounting state (MZ) abuts the bearing region (A) of the bearing web (A) and the support surface (S) of the at least one securing element (8) in a flush manner.

15. An item of furniture (4) comprising a furniture carcass (7) and a drawer (4), wherein the drawer (4) comprises an arrangement (1) according to at least one of the preceding claims.

## Revendications

1. Ensemble (1) composé
- d'une paroi latérale de tiroir (12) avec au moins une nervure d'appui (2) pour un fond de tiroir (3) d'un tiroir (4), dans lequel la nervure d'appui (2) fait partie de la paroi latérale de tiroir (12) ou partie d'un dispositif porteur (13) pour la paroi latérale de tiroir (12),
- un dispositif d'entraînement (6), en particulier dispositif d'éjection, pour l'entraînement du tiroir (4) par rapport à un corps de meuble (7) et
- au moins un dispositif de retenue (5) pour le dispositif d'entraînement (6),
dans lequel
- le au moins un dispositif de retenue (5) présente au moins un élément de fixation (8), avec lequel le au moins un dispositif de retenue (5) peut être fixé sur la nervure d'appui (2),
- la nervure d'appui (2) comprend au moins un logement (9) pour le au moins un élément de fixation (8) et au voisinage d'au moins un logement (9) au moins une zone d'appui (A) pour le fond de tiroir (3), et
- le au moins un élément de fixation (8) présente une surface de support (S), laquelle dans un état de fixation (BZ), dans lequel le au moins un dispositif de retenue (5) est fixé sur la nervure d'appui (2), est tournée vers le fond de tiroir (3),
**caractérisé en ce que** la surface de support (S) du au moins un élément de fixation (8) réalise conjointement avec la au moins une zone d'appui (A) de la nervure d'appui (2) dans l'état de fixation (BZ) une surface d'appui de fond de tiroir (E) sensiblement plane pour le fond de tiroir (3), dans lequel la surface d'appui de fond de tiroir (E) dans l'état de fixation (BZ) peut être amenée en contact à fleur sur le fond de tiroir (3), dans lequel le au moins un élément de fixation (8) présente une surface de retenue (H) opposée à la surface de support (S), dans lequel dans l'état de fixation (BZ) la surface de retenue (H) de l'élément de fixation (8) s'applique sur une surface de retenue homologue (G) du logement (9) de la nervure d'appui (2).

2. Ensemble selon la revendication 1, **caractérisé en ce que** la surface de retenue (H) est orientée parallèlement à la surface de support (S) et/ou la surface de retenue homologue (G) est orientée parallèlement à la zone d'appui (A).

3. Ensemble selon la revendication 1 ou 2, **caractérisé en ce que** la nervure d'appui (2) est réalisée sous la forme d'une tôle avec une épaisseur de tôle sensiblement régulière.

4. Ensemble selon la revendication 3, **caractérisé en ce que** le logement (9) présente un creux s'écartant de la zone d'appui (A) dans la tôle.

5. Ensemble selon la revendication 4, **caractérisé en ce que** la surface de retenue homologue (G) du logement (9) - mesurée perpendiculairement à l'étendue longitudinale (L) de la tôle - est espacée d'une épaisseur de tôle de la zone d'appui (A) .

6. Ensemble selon la revendication 5, **caractérisé en ce que** l'élément de fixation (8) et le logement (9) dans l'état de fixation (BZ) présentent conjointement - mesurée perpendiculairement à l'étendue longitudinale (L) de la tôle - une épaisseur, laquelle est deux fois plus grande que l'épaisseur de tôle de la nervure d'appui (2).

7. Ensemble selon l'une quelconque des revendications 1 à 6, **caractérisé en ce que** le dispositif de retenue (5) est réalisé sous la forme d'une tôle avec une épaisseur de tôle (D₅) sensiblement régulière.

8. Ensemble selon l'une quelconque des revendications 1 à 7, **caractérisé en ce que** le dispositif de retenue (5) présente une zone de montage de dispositif d'entraînement (5a) sensiblement plane et une zone de contact de fond de tiroir (5b) sensiblement plane.

9. Ensemble selon la revendication 8, **caractérisé en ce qu'**un coude (5c) est réalisé entre la zone de montage de dispositif d'entraînement (5a) et la zone de contact de fond de tiroir (5b), dans lequel la zone de montage de dispositif d'entraînement (5a) est pliée par rapport à la zone de contact de fond de tiroir (5b) dans une plage angulaire (α) comprise entre 1° et 15°, de préférence entre 3° et 5°, en direction du fond de tiroir (3).

10. Ensemble selon l'une quelconque des revendications 1 à 9, **caractérisé en ce qu'**au moins un élément de serrage (10) est disposé sur le dispositif de retenue (5), lequel dans l'état de fixation (BZ) s'applique avec une surface de serrage (K) tournée vers le fond de tiroir (3), de préférence orientée parallèlement à la surface de support (S) de l'élément de fixation (8), sur une surface de serrage homologue (M) de la nervure d'appui (2) opposée à la zone d'appui (A) de la nervure d'appui (2), de préférence orientée parallèlement à la zone d'appui de la nervure d'appui (2).

11. Ensemble selon la revendication 8 ou 9 et selon la revendication 10, **caractérisé en ce que** le au moins un élément de serrage (10) est relié à la zone de contact de fond de tiroir (5b) par l'intermédiaire d'une zone de pliure (11).

12. Ensemble selon la revendication 10 ou 11, **caractérisé en ce que** la surface de serrage (K) du au moins un élément de serrage (10) - mesurée perpendiculairement à l'étendue longitudinale (L) de la tôle du dispositif de retenue (5) - est espacée d'une épaisseur de tôle (D₅) de la surface de support (S) de l'élément de fixation (8).

13. Ensemble selon l'une quelconque des revendications 8 à 12, **caractérisé en ce que** le dispositif d'entraînement (6) pour l'entraînement du tiroir (4) est monté par rapport à un corps de meuble (7) dans une zone de montage de dispositif d'entraînement (5a) du dispositif de retenue (5).

14. Ensemble selon au moins l'une des revendications précédentes, **caractérisé par** un fond de tiroir (3), qui dans une position de montage (MZ) s'applique à fleur sur la zone d'appui (A) de la nervure d'appui (A) et sur la surface de support (S) du au moins un élément de fixation (8).

15. Meuble (14) avec un corps de meuble (7) et un tiroir (4), dans lequel le tiroir (4) présente un ensemble (1) selon au moins l'une des revendications précédentes.
